Europäisches Patentamt

European Patent Office

Office européen des brevets

(19)

(11) Numéro de publication: **0 010 474**

**B1**

(12) **FASCICULE DE BREVET EUROPEEN**

(45) Date de publication du fascicule du brevet: **25.05.83**

(51) Int. Cl.³: **H 01 J 47/02**

(21) Numéro de dépôt: **79400703.9**

(22) Date de dépôt: **04.10.79**

(54) Détecteur de rayonnement.

(30) Priorité: **13.10.78 FR 7829267**

(43) Date de publication de la demande:
**30.04.80 Bulletin 80/9**

(45) Mention de la délivrance du brevet:
**25.05.83 Bulletin 83/21**

(84) Etats contractants désignés:
**BE DE GB IT NL**

(56) Documents cités:
**FR - A - 1 405 707**
**FR - A - 2 313 902**
**FR - A - 2 333 255**
**US - A - 2 397 072**

(73) Titulaire: **COMMISSARIAT A L'ENERGIE ATOMIQUE Etablissement de Caractère Scientifique Technique et Industriel B.P. 510 F-75752 Paris Cedex 15 (FR)**

(72) Inventeur: **Allemand, Robert Chemin de Bouffière F-38330 Saint Ismier (FR)**
Inventeur: **Laval, Michel Le Replat de Pinet F-38410 Saint Martin d'Uriage (FR)**

(74) Mandataire: **Mongrédien, André et al, c/o BREVATOME 25, rue de Ponthieu F-75008 Paris (FR)**

Courier Press, Leamington Spa, England.

## Détecteur de rayonnement

La présente invention concerne un détecteur de rayonnement et notamment pour tomographies à rayons X.

De manière plus précise, cette invention s'applique à des détecteurs multicellulairs contenant un gaz à haute pression et destinés à être utilisés dans des systèmes tomographiques, comportant un calculateur par exemple. Dans un appareil de tomographie à rayons X comportant un calculateur, la distribution spatiale des intensités des rayons X ayant traversé l'objet à visualiser selon le plan de coupe et suivant des parcours différents, est traduite en signaux électriques qui sont traités pour permettre l'obtention d'un image de cet objet. Les détecteurs utilisés doivent détecter l'énergie électromagnétique, avec une résolution spatiale suffisante. La vitesse d'échantillonnage du signal fourni par les détecteurs est généralement limitée par le temps de relaxation de ces détecteurs. Il est donc nécessaire d'utiliser des détecteurs présentant des temps de relaxation faibles, une grande sensibilité et une très bonne résolution spatiale. On sait qu'un détecteur de type multicellulaire, comprenant une pluralité de cellules séparées spatialement, permet de réaliser un appareil de tomographie économique et efficace. Dans ce type de détecteur, la radiation X est détectée dans un gaz de masse atomique élevée sous haute pression. Les photons X interagisent avec le gaz pour produire des paires ions-électrons. Les électrons sont recueillis sur des électrodes, sous l'effet d'un champ électrique appliqué entre les électrodes et fournissent des courants électriques proportionnels à l'intensité des rayons X. Ces électrons sont recueillis sur des plaques ou électrodes positives alternant avec des plaques ou électrodes négatives sur lesquelles on recueille les ions. Les électrons et les ions positifs qui sont produits par l'interaction des photons X et du gaz se déplacent le long des lignes de force du champ électrique, et sont collectés sur les électrodes positives et négatives. La totalité des charges produites par l'interaction des rayons X avec le gaz doit être collectée en un temps aussi bref que possible, et surtout en un temps le plus uniforme possible dans le volume de la cellule de détection, de façon à ce que le signal correspondant à l'intervalle d'échantillonnage suivant, ne soit pas perturbé.

Généralement, les électrodes positives et négatives sont séparées par des isolants qui, malheureusement présentent une très grande sensibilité aux radiations X; ce qui entraîne des phénomènes de conductions parasites importants. Cet inconvénient est aggravé par le fait que ces phénomènes ne sont pas répétitifs quantitativement et qu'ils présentent une importante persistance, après l'irradiation. En outre, la nécessité d'accroître la résolution spatiale pour améliorer la qualité de l'image obtenue nécessite de construire les détecteurs présentant un très grand nombre de cellules. Les appareils de tomographie les plus anciens présentaient environ 200 cellules de détection disposées en éventail sur un angle de 40°. Actuellement, il est nécessaire, dans le but d'accroître la qualité de l'image, de construire des appareils présentant 500 ou même 1000 cellules sur le même angle. Dans le but de diminuer sensiblement les courants de fuite dans les isolants séparant les électrodes des détecteurs, on sait qu'il est possible d'employer des isolants de type minéral et en particulier des isolants en céramique; ces isolants peuvent être travaillés facilement, ce sont d'excellents isolants électriques, et ils sont dimensionnellement très stables; cependant, malgré toutes leurs qualités, ils ne permettent pas d'éliminer tous les problèmes causés par les courants de fuite. Ce type de détecteur est décrit dans le brevet français n° 1 405 707. L'amélioration éventuelle de ce type de détecteur consiste à supprimer l'isolant au sein de l'électrode et de reporter cet isolant, entre les électrodes aux extrémités haute et basse de celle-ci. Cette solution a cependant pour inconvénient de rendre les électrodes moins rigides, plus fragiles, ce qui peut entraîner des effets de microphonie dus au manque de rigidité des électrodes. Ce type de détecteur est décrit dans le brevet français n° 2.333.255.

La présente invention a pour but de remédier à ces inconvénients et notamment de réaliser un détecteur de rayonnement, dans lequel les fuites de courant dans les isolants séparant les électrodes et dans les bornes de connexion de ces électrodes avec leur alimentation et avec les voies de mesure des courants ioniques ou électroniques, sont minimisées. De plus, le dispositif selon l'invention permet d'accroître la rigidité des électrodes et ainsi d'éviter tout phénomène parasite de microphonie.

L'invention a pour objet un détecteur de rayonnement comprenant une chambre d'ionisation remplie d'un gaz donné et, dans cette chambre, des électrodes juxtaposées et séparées, formées de plaques successives de forme générale rectangulaire disposées en regard les unes des autres et parallèlement à la direction du rayonnement incident à détecter, ces plaques étant destinées à être portées à des potentiels tels que deux plaques successives sont respectivement portées à un premier et un deuxième potentiels, ces plaques étant supportées, à deux de leurs extrémités opposées parallèles à la direction du rayonnement incident à détecter, par des barrettes isolantes, caractérisé en ce que chaque plaque comprend, à proximité de chacune desdites barrettes isolantes, une moulure parallèle à la direction du rayonnement incident à détecter et ayant un profil en V, ce V étant saillant sur une face de la plaque et rentrant sur l'autre face de façon que le sommet du V saillant de la moulure sur une face d'une plaque s'engage dans le V rentrant de la face en regard de la plaque suivante, l'ensemble desdites moulures formant ainsi des chicanes de protection des barrettes isolantes contre les rayonnements susceptibles d'être diffusés ou émis par fluorescence par ledit gaz en direction desdites barrettes.

Selon une autre caractéristique de l'invention, chaque plaque comprend, en outre, à son extrémité opposée à celle la plus proche du rayonnement incident à détecter, un bord relevé agencé de manière à occulter le rayonnement à la fin du parcours de celui-ci dans le détecteur, empêchant ainsi toute ionisation en arrière du volume séparant deux plaques successives.

Les caractéristiques et avantages de l'invention ressortiront mieux de la description qui va suivre, donnée à titre illustratif, en référence aux dessins annexés, dans lesquels:

— la figure 1 représente un détecteur de rayonnement, conforme à l'invention;
— la figure 2 est une coupe transversale des barrettes supportant les plaques;
— la figure 3 est un schéma permettant de mieux comprendre le rôle des chicanes formées par les plaques, à proximité des barrettes isolantes;
— la figure 4 permet de mieux comprendre le rôle du dépôt conducteur formé sur les barrettes isolantes.

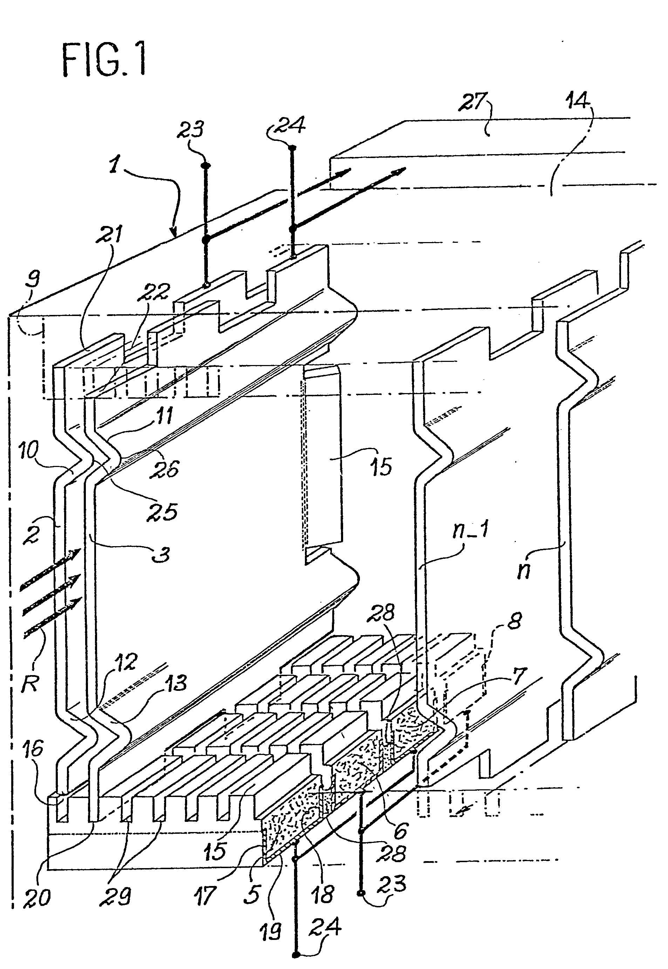

En référence à la figure 1, on a représenté un détecteur de rayonnement, conforme à l'invention. Ce détecteur comprend une chambre d'ionisation multicellulaire comportant une pluralité d'électrodes ayant la forme de plaques réunies alternativement à deux sources de potentiel; chaque cellule comprend une électrode et des électrodes situées de part et d'autre; du gaz est contenu dans les volumes formés entre ces électrodes. La chambre d'ionisation qui n'est pas représentée en détail sur la figure, peut être remplie de xénon sous pression, dans le cas où le rayonnement R est un rayonnement X. Toutes les électrodes 2 sont portées à un premier potentiel 23 positif par exemple, de manière à constituer des anodes; les électrodes 3 peuvent être portées à un second potentiel 24 nul ou négatif par exemple, pour constituer des cathodes. Toutes les électrodes 2 et toutes les électrodes 3 sont portées à leurs extrémités hautes et basses par des barrettes isolantes; du côté de l'extrémité basse des électrodes, ces barrettes isolantes sont représentées en 5, 6, 7, 8. Du côté de l'extrémité haute, ces barrettes isolantes sont représentées de manière schématique en 9. A proximité des barrettes isolantes, les plaques qui constituent les électrodes forment des chicanes telles que 10, 11, 12, 13.... Ces chicanes, comme on le verra plus loin en détail, sont destinées à protéger les barrettes contre les rayonnements X qui peuvent être émis en direction de l'isolant de ces barrettes et qui pourraient provoquer des courants de fuite dans cet isolant. Chaque plaque présente, à l'opposé de l'extrémité qui reçoit le rayonnement R, un bord relevé 15. Ce bord relevé permet d'éviter que les rayons X incidents qui ne sont pas entièrement arrêtés par le gaz entre les électrodes viennent frapper le fond de la chambre d'ionisation. En effet, si l'ionisation du gaz contenu dans la chambre se produit près du fond de cette chambre, les ions créés à cet endroit se déplacent lentement et ne parviennent sur les cathodes que plusieurs dizaines de millisecondes après le rayonnement X qui leur a donné naissance. Il peut en résulter un phénomène de traînage, d'autant plus important qu'une fraction des rayons X est détectée dans ce cas, en dehors de la zone de champ électrique uniforme. Ces bords relevés évitent donc toute ionisation, en dehors du champ électrique uniforme existant entre les électrodes. Ce bord relevé permet l'interception de la presque totalité des rayons X inutilisés et il a en outre pour avantage d'assurer une meilleure rigidité mécanique des plaques formant les électrodes. Du fait de cet accroissement de la rigidité mécanique des plaques, l'épaisseur de celles-ci peut être considérablement diminuée; il en résulte que le nombre de cellules de détection contenues dans la chambre d'ionisation peut être sensiblement accru et qu'ainsi la résolution spatiale du détecteur est augmentée.

Le nombre des barrettes isolantes qui supportent les électrodes a été limité à quatre sur la figure, pour simplifier la représentation. Ces barrettes sont partiellement sectionnées sur une face 15, en regard des extrémités 16 correspondantes des plaques, de manière à supporter les extrémités hautes et basses de ces plaques et à les séparer, par des tronçons isolants. Chacune des barrettes est recouverte d'un dépôt conducteur 19, sur une face opposée à la face 15, située en regard de l'extrémité des plaques. Ce dépôt métallique recouvre aussi partiellement les côtés 17, 18 des barrettes, adjacents à la face de la barrette recouverte par le dépôt conducteur 19. Les extrémités 16, 20, 21, 22... des plaques, situées à proximité des barrettes sont découpées de manière que la barrette 6, par exemple, supporte toutes les plaques 2 portées au même premier potentiel positif 23 et une barrette adjacente telle que 5 supporte toutes les plaques 3, portées au deuxième potentiel négatif 24. De la même manière, dans l'exemple de réalisation représenté sur la figure, la barrette 8 supporte toutes les plaques 2 portées au premier potentiel positif 23. Les dépôts métalliques tels que 17, 18, 19 qui recouvrent les barrettes sont portés au même potentiel que celui des plaques supportées par les barrettes correspondantes.

C'est ainsi que dans l'exemple de réalisation représenté su la figure, le dépôt métallique 17, 18, 19 recouvrant la barrette 5 et le dépôt métallique recouvrant la barrette 7 sont portés au méme potentiel que celui des plaques correspondantes 3, c'est-à-dire au deuxième potentiel 24. De la même manière, les dépôts métalliques recouvrant les barrettes 6, 8, sont portés au même potentiel que celui des plaques 2, c'est-à-dire au potentiel 23. Ainsi, grâce au découpage des extrémités des plaques, à proximité des barrettes, tel que cela apparaît clairement en 21, 22, chaque plaque est correctement fixée sur les barrettes et est isolée de la plaque suivante. Comme on le verra par le suite, les dépôts métalliques qui recouvrent chacune des barrettes permettent de diminuer les courants de fuites dans l'isolant des barrettes. Cette diminution résulte de la présence du dépôt conducteur métallique qui crée un système d'anneau de garde, à proximité de l'extrémité de chacune des barrettes.

Les chicanes telles qué 10, 11, 12, 13 ont un profil en V; ce V est saillant sur une face de chaque plaque et rentrant sur l'autre face, de sorte que le sommet 25 du V saillant sur une plaque, s'engage dans la base 26 du V rentrant de la plaque suivante afin d'obstruer complètement l'intervalle entre les deux plaques.

On a également représenté de manière non détaillée des moyens 27 aptes à recueillir et à traiter les signaux en provenance des différentes électrodes; ces signaux permettent de visualiser la coupe d'un organe situé en avant du détecteur et qui est traversé par les rayons X; après absorption partielle par l'organe, les rayons X viennent frapper le détecteur. Les moyens 27 qui permettent cette visualisation sont bien connus dans l'état de la technique et n'ont pas été représentés en détail.

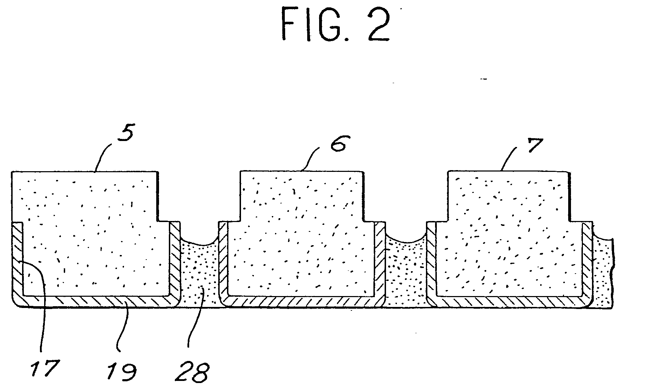

La figure 2 est une coupe transversale des barrettes supportant les plaques à l'une de leurs extrémités.

Les différentes barrettes isolantes sont rendues solidaires grâce à des couches isolantes de résine Epoxy, telles que la couche 28. Ces couches de résine ont un niveau qui est inférieur au rebord des dépôts conducteurs 17, 18 de manière que la résine ne soit pas en contact avec les barrettes isolantes 5, 6, 7 et 8. Le montage du détecteur peut être réalisé de la manière suivante; chacune des barrettes est recouverte des dépôts conducteurs 17, 18, 19 constitués par exemple par une peinture d'argent, puis les différentes barrettes sont rendues solidaires grâce aux couches 28 de résine Epoxy. Enfin, les barrettes sont partiellement sectionnées par des rainures telles que 29, puis les différentes plaques correctement découpées sont mises en place sur les supports hauts et bas ainsi réalisés par cet assemblage de barrettes rainurées.

Il est bien évident qui les rainures de positionnement de chaque plaque pourraient être réalisées préalablement au collage des barrettes. Dans ce cas, les barrettes ne présentent des rainures qu'en regard des plaques qu'elles supportent.

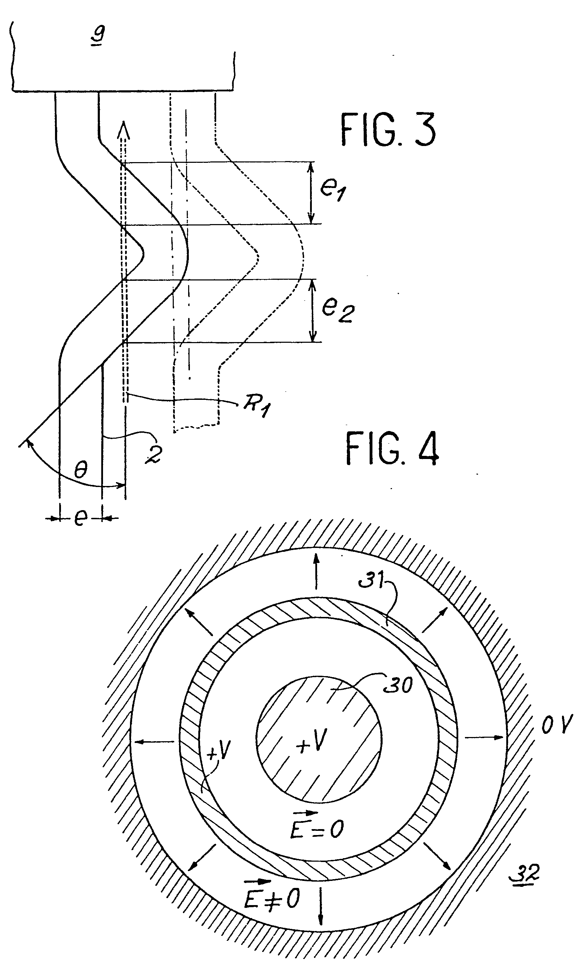

En référence à la figure 3, on a représenté l'une des chicanes 10 de la plaque 2 par exemple. Cette chicane a le profil d'une moulure en V et s'étend dans la direction du rayonnement R, parallèlement au plan formé par les faces des barrettes qui supportent les plaques. On a représenté schématiquement en 9, l'une des barrettes situées à proximité de cette extrémité de la plaque 2. Des rayons X qui ne suivent pas le trajet des rayons incidents R peuvent être émis dans la direction $R_1$, vers la barrette 9 supportant les électrodes. Cette émission peut résulter, soit d'une diffusion de certains rayons dans le gaz contenu dans la chambre, soit d'une fluorescence du gaz de détection. Les rayons X diffusés dans le gaz sont très peu nombreux, mais présentent une forte énergie. Les rayons X de fluorescence sont par contre très nombreux mais leur énergie est faible. Les rayons diffusés ou de fluorescence sont totalement arrêtés par les chicanes. En effet, si l'on désigne par $\Theta$ l'angle d'incidence d'un rayon parasite avec les branches du V de la chicane 10, l'épaisseur totale $e_t$ que devra traverser le rayon X au niveau de la chicane sera égale à la somme des distances $e_1$ et $e_2$ parcourues par ce rayon dans la masse de la plaque 10. On peut donc écrire $e_t = e_1 + e_2$ et, par approximation

$$e_t = \frac{2e}{sinus\ \Theta}$$

si $e$ désigne l'épaisseur de la plaque 2. Il résulte de ces observations que les rayons X diffusés ou de fluorescence ne peuvent atteindre la barrette isolante 9, du fait de l'importance de l'épaisseur $e_t$ totale de la plaque à l'endroit considéré. La forme en chicane, à proximité des barrettes isolantes, empêche donc les rayons X ou de fluorescence ou diffusés d'atteindre les barrettes isolantes et ainsi évite l'apparition de courants de fuite dans ces barrettes.

La figure 4 est une illustration du principe de fonctionnement d'un anneau de garde, dans le domaine de l'électrostatique. On suppose sur cette figure qu'un conducteur central 30 est porté à un potentiel +V par rapport à un potentiel de référence; ce conducteur central est entouré par un autre conducteur 31 porté au potentiel +V par rapport au potentiel de référence; le potentiel de référence est celui de la masse extérieure 32, supposée portée au potentiel 0 volt. Le conducteur coaxial 31 est isolé du conducteur central 30; ce conducteur coaxial joue le rôle d'anneau de garde pour le conducteur central puisque le champ électrique $\vec{E}$ entre ce conducteur central et l'anneau de garde est nul; en effet, le conducteur central et le conducteur coaxial sont portés au même potentiel par rapport au potentiel de référence de la masse extérieure et un champ électrique non nul n'apparaît qu'à l'extérieur de l'anneau de garde, entre cet anneau et la masse extérieure 32. Il résulte de ce principe, que si l'on se reporte à la figure 1, la couche conductrice 19, portée au même potentiel qui celui de l'électrode supportée par la barrette correspondante, joue le rôle d'anneau de garde pour cette électrode. Le champ électrique est donc nul entre les électrodes 3, portées par la barrette 5 et la couche conductrice 19, dans le mode de réalisation représenté sur la figure 1.

De la même manière, le champ électrique est nul entre la couche conductrice recouvrant la barrette 6 et les électrodes 2, entre la couche conductrice recouvrant la barrette 7 et les électrodes 3, et entre la couche conductrice recouvrant la barrette 8 et les électrodes 2. Il n resulte qu'aucun courant de fuite n'apparaît dans l'isolant des barrettes, ni entre électrodes portées à des potentiels différents, ni entre chaque électrode et le potentiel de référence.

Dans l'exemple de réalisation qui vient d'être décrit, les barrettes isolantes peuvent être réalisées dans des barreaux de céramiques qui sont d'excellents isolants électriques, dimensionnellement très stables et facilement usinables avec un outillage classique.Les électrodes sont réalisées préférentiellement en un matériau dense présentant un numéro atomique élevé, de façon à constituer un bon écran aux rayons X entre chaque cellule. Ce matériau peut être par exemple du tungstène.

Grâce au détecteur qui vient d'être décrit, il est possible d'atteindre les buts mentionnés plus haut, c'est-à-dire d'éviter tout courant de fuite dans les isolants supportant les électrodes, d'éviter tout phénomène de traînage à l'arrière des électrodes, d'assurer une bonne rigidité mécanique de ces électrodes et ainsi, de réaliser un détecteur présentant 500 et même 1000 cellules de détection sur un angle de 40°.

## Revendications

1. Détecteur de rayonnement comprenant une chambre d'ionisation remplie d'un gaz donné et, dans cette chambre, des électrodes (2, 3...) juxtaposées et séparées, formées de plaques successives de forme générale rectangulaire disposées en regard les unes des autres et parallèlement à la direction du rayonnement incident (R) à détecter, ces plaques étant destinées à être portées à des potentiels tels que deux plaques successives sont respectivement portées à un premier et un deuxième potentiels, ces plaques étant supportées, à deux de leurs extrémités opposées parallèles à la direction du rayonnement incident à détecter, par des barrettes isolantes (5, 6, 7, 8...), caractérisé en ce que chaque plaque comprend, à proximité de chacune desdites barrettes isolantes, une moulure (12) parallèle à la direction du rayonnement incident à détecter et ayant un profil en V, ce V etant saillant sur une face de la plaque et rentrant sur l'autre face de façon que le sommet du V saillant de la moulure sur une face d'une plaque (2) s'engage dans le V rentrant de la face en regard de la plaque suivante (3), l'ensemble desdites moulures formant ainsi des chicanes de protection des barrettes isolantes contre les rayonnements susceptibles d'être diffusés ou émis par fluorescence par ledit gaz en direction desdites barrettes.

2. Détecteur selon la revendication 1, caractérisé en ce que chaque plaque comprend, en outre, à son extrémité opposée à celle la plus proche du rayonnement incident à détecter, un bord relevé (15) agencé de manière à occulter le rayonnement à la fin du parcours de celui-ci dans le détecteur, empêchant ainsi toute ionisation en arrière du volume séparant deux plaques successives (2, 3).

## Patentansprüche

1. Strahlungsnachweisvorrichtung, umfassend eine mit einem gegebenen Gas gefüllte Ionisationskammer und in dieser Kammer einander gegenüberliegende und getrennte Elektroden (2, 3...), die durch aufeinanderfolgende Platten allgemein rechteckiger Form gebildet sind, welche einander gegenüberliegend und parallel zur Richtung der einfallenden, nachzuweisenden Strahlung (R) angeordnet sind, wobei diese Platten auf Potentiale derart zu bringen sind, daß zwei aufeinanderfolgende Platten auf ein erstes bzw. zweites Potential gebracht sind, und diese Platten an zwei entgegengesetzten Enden parallel zur Richtung der einfallenden, nachzuweisenden Strahlung durch isolierende Stäbe (5, 6, 7, 8...) gehalten sind, dadurch gekennzeichnet, daß jede Platte in der Nähe eines jeden isolierenden Stabes eine zur Richtung der einfallenden, nachzuweisenden Strahlung parallele Rippe (12) mit einem V-Profil aufweist, wobei dieses V auf einer Seite der Platte hervorsteht und auf der anderen Seite derart einspringend ist, daß die Spitze des von der rippe auf einer Seite einer Platte (2) hervorspringenden V in das einspringende V auf der Seite der folgenden, gegenüberliegenden Platte (3) eingreift, und daß die Gesamtheit der Rippe somit eine Abschirmung für die isolierenden Stäbe gegenüber der Strahlung bildet, welche durch Fluoreszenz in dem Gas in Richtung der Stäbe gestreut oder ausgesandt werden kann.

2. Vorrichtung nach Anspruch 1, dadurch gekennzeichnet, daß jede Platte ferner an ihrem demjenigen Ende, welches der in die Nachweisvorrichtung einfallenden Strahlung am nächsten liegt, gegenüberliegenden Ende einen einspringenden Rand (15) aufweist, der derart ausgebildet ist, daß er die Strahlung am Ende ihres Weges in der Nachweisvorrichtung abschirmt, wodurch jegliche Ionisation des durch zwei aufeinanderfolgende Platten (2, 3) getrennten Volumens von hinten vermeidbar ist.

## Claims

1. A radiation detector comprising an ionization chamber filled with a given gas and, in said chamber, juxtaposed and separated electrodes (2, 3...) formed by successive plates of general rectangular shape disposed opposite one another and parallel to the direction of the incident radiation (R) to be detected, said plates being intended to be brought to potentials such that two successive plates are respectively brought to a first and a second potential, said plates being supported by insulating bars (5, 6, 7, 8...) at two of their opposite ends parallel to the direction of the incident radiation to be detected, characterised in that each plate comprises, near each of the said insulating bars, a moulding (12) parallel to the direction of the incident radiation to be detected and having a V-profile, said V being projecting on one surface of the plate and re-entrant on the other surface so that the apex of the projecting V of the moulding on one surface of a plate (2) engages in the re-entrant V of the opposite surface of the next plate (3), the said mouldings thus together forming baffles for protecting the insulating bars from the radiations likely to be diffused or emitted by fluorescence by said gas in the direction of said bars.

2. A detector according to claim 1, characterised in that each plate also comprises, at its opposite end to that closest to the incident radiation to be detected, a raised edge (15) arranged so as to occult the radiation at the end of the path thereof, in the detector, thus preventing any ionization behind the space separating two successive plates (2, 3).

# FIG.1

# FIG. 2

17    19    28

FIG. 3

FIG. 4